# EUROPÄISCHE PATENTANMELDUNG

(11) **EP 0 837 318 A2**
(43) Veröffentlichungstag der Anmeldung: **22.04.1998**
(21) Anmeldenummer: 97250305.6
(22) Anmeldetag: 16.10.1997
(51) Int. Cl.: G01N 21/47

(54) **Farbmessvorrichtung**

(30) Priorität: 21.10.1996 DE 19644616
(71) Anmelder: Dr. Bruno Lange GmbH, D-14163 Berlin (DE)
(72) Erfinder: Brücker, Friedhelm, Dipl.-Ing., 40549 Düsseldorf (DE)
(74) Vertreter: Christiansen, Henning, Dipl.-Ing.

(57) **Zusammenfassung**

Die Erfindung betrifft Farbmeßvorrichtung (1), vorzugsweise zur Messung an anodisierten Aluminiumoberflächen, mit einem eine Lichtquelle (2.1) und einen in einem gemeinsamen, eine Meßöffnung (10) aufweisenden Gehäuse angeordneten, zum Empfang des von der zu vermessenden Oberfläche diffus reflektierten Lichtes (2.4) vorgesehenen Sensor (2.2) aufweisenden Meßteils (2), wobei vor der Meßöffnung (10) in dem Strahlengang zwischen der Lichtquelle (2.1) und der zu vermessenden Oberfläche (13) eine transparente Scheibe (5) angeordnet ist. Die transparente Scheibe (5) ist Element einer als kappenförmiges Zusatzteil des Meßteils (2) ausgebildeten Halterung (3).

## Beschreibung

Die Erfindung betrifft eine Farbmeßvorrichtung gemäß dem Oberbegriff des Anspruchs 1.

Aus der deutschen Patentschrift DE-C3 25 53 536 ist eine Anordnung zur Messung des Schwärzungsgrades der ebenen Oberfläche einer Probe, beispielsweise eines eloxierten Aluminiumteils, bekannt.

Diese Meßanordnung weist eine Lichtquelle und ein Photoelement zum Empfang der von der Oberfläche der Probe diffus reflektierten Strahlung auf. Die Lichtquelle und das Photoelement sind in einem gemeinsamen Gehäuse angeordnet, welches eine zum Austritt des zum Messen verwendeten Lichtstrahls und zum Eintritt des von der Probenoberfläche reflektierten Lichtes vorgesehene Meßöffnung aufweist. Die Meßöffnung ist durch eine transparente Scheibe verschlossen. Diese Meßanordnung wird mit der transparenten Scheibe auf der Oberfläche der zu vermessenden Probe positioniert, wobei zuvor auf dieser Oberfläche ein Netzmittel aufgetragen worden ist. Durch diese Anordnung wird der Einfluß der Oberflächenrauhigkeit auf das Meßergebnis weitgehend eliminiert. Die aufgesetzte und mit dem Netzmittel in Kontakt stehende Scheibe verhindert ein Eintrocknen bzw. eine Schlierenbildung des Netzmittels.

Die vorbekannte Vorrichtung weist den Nachteil auf, daß die Meßanordnung ausschließlich und speziell für Messungen an eloxierten Aluminiumoberflächen mit dem vorstehend beschriebenen Effekt einsetzbar ist. Bei Farbmessungen an anderen, vorzugsweise trockenen, Proben führt die vor der Meßöffnung angeordnete, transparente Scheibe zu optischen Nachteilen, beispielsweise zu Lichtverlusten.

Aus US 3 421 821 ist ein Hand-Farbspektrenanalysator zur Bestimmung des Farbtones einer Probe durch Reflexionsmessung bekannt. Bei diesem Gerät liegen Lichtquelle und Detektor weitgehend ungeschützt in einer kegelstumpfartigen Mündung, die auf eine zu messende Probe aufgesetzt wird.

Aus US 5 117 101 ist ein Farberkennungssystem bekannt, welches ebenfalls nach dem Reflexionsprinzip arbeitet und bei dem die zu untersuchende Oberfläche über mehrere Lichtleitfasern bestrahlt und das reflektierte Licht zu mehreren Detektoren gelenkt wird. Diese Vorrichtung hat einen relativ aufwendigen Aufbau.

Ausgehend von den Mängeln des Standes der Technik liegt der Erfindung die Aufgabe zugrunde, eine Farbmeßvorrichtung anzugeben, deren konstruktiver Aufbau einen universellen Einsatz ermöglicht und damit zu einer Erhöhung des Gebrauchswertes führt.

Die Aufgabe wird durch die im kennzeichnenden Teil des Anspruchs 1 angegebenen Merkmale gelöst.

Die Erfindung schließt die Erkenntnis ein, daß der Einsatz-bereich eines in der Hand zu haltenden, nach Art eines Schreibgeräts ausgebildeten Meßteils bedarfsweise durch eine Zusatzeinrichtung erweitert werden kann, welche nach Art eines Vorsatzgeräts eine Anpassung des Frontbereichs an die besonderen Einsatzbedingungen ermöglicht. Diese Zusatzeinrichtung wird in Abhängigkeit von der jeweiligen Meßaufgabe mit dem Meßgerät verbunden. Damit kann die Vorrichtung ungefährdet in die Flüssigkeit eintauchen und Meßfehler ausschalten, welche bei nicht benetzender Messung entstehen würden. Dabei ist der Meßteil auch jederzeit - nach kurzfristiger Umrüstung - wieder für konventionelle Messungen verfügbar.

Auf diese Weise lassen sich in bequemer Handhabung die erreichten Farbintensitäten während der Anodisierung von Aluminiumoberflächen - auch wiederholt - auf bequeme Art und Weise mit großer Genauigkeit messen, so daß der Färbungsvorgang derart präzise zeitlich beeinflußt werden kann, daß die gewünschte Farbtiefe sehr genau eingehalten ist. Damit kann die günstige Handhabbarkeit des Meßgeräts unmittelbar zur Qualität der Fertigung beitragen.

Entsprechend einer bevorzugten Ausführungsform der Erfindung weist die Farbmeßeinrichtung für anodisierte Aluminiumoberflächen einen Meßteil mit einer Meßöffnung auf, durch welche der Meßstrahl auf das Meßobjekt fällt und die vom Meßobjekt diffus reflektierte Strahlung zu einem optischen Sensor geführt wird. Um den durch die Rauhigkeit der zu vermessenden Oberfläche bedingten Strahlungsanteil im reflektierten Licht auszuschalten, ist die zu vermessende Oberfläche mit einem Netzmittel, insbesondere Wasser, Öl oder einer Emulsion, bedeckt. Um die Oberfläche des Netz-mittels zu glätten bzw. eine Schlierenbildung zu vermeiden, ist am Fuß des Meßteils eine Scheibe, vorzugsweise eine Glasscheibe, vorgesehen.

Die Scheibe ist in einer mit dem Gehäuse des Meßteils verbindbaren Halterung angeordnet und bildet entsprechend der bevorzugten Ausführungsform der Erfindung den Boden einer Kappe, welche auf den die Meßöffnung des Meßteils einschließenden Gehäusebereich aufsteckbar ausgebildet ist.

Die vorgenannte kappenartige Halterung, an deren Boden sich die Scheibe befindet, ist nach einer günstigen Weiterbildung der Erfindung in Anpassung an das Gehäuse des Meßteils im wesentlichen kegelstumpfförmig ausgebildet. Sie wird je nach Bedarf auf das Gehäuse des Meßteils auf gleicher Achse liegend, derart aufgesteckt, daß die an der Spitze des Kegelstumpfes befindliche Scheibe die Meßöffnung des Meßteils transparent verschließt.

Nach Abnehmen der die Scheibe tragenden, kappenförmigen Halterung ist das Meßteil auf einfache Weise zur Farbbestimmung anderer, insbesondere trockener, farbiger Flächenbereiche, beispielsweise von lackierten und/oder Kunststoffoberflächen, umrüstbar.

Entsprechend einer bevorzugten Ausführungsform der Erfindung weist die Halterung an der Kegelstumpfspitze einen kreisringförmigen Kragen auf, welcher eine Ebene aufspannt, die sich senkrecht zur Ausbreitungsrichtung der zur Farbmessung verwendeten Lichtstrahlung erstreckt und gleichzeitig die transparente Scheibe trägt.

Dadurch wird in günstiger Weise erreicht, daß die Farbmeßvorrichtung mit der in der kappenförmigen Halterung befindlichen Scheibe lediglich auf die zu vermessende, mit einem Netzmittel versehene Oberfläche eines eloxierten Aluminium-teils aufgesetzt werden muß, um eine Farbmessung durchzuführen. Die Positionierungsbedingung für das Meßteil, wonach dafür Sorge zu tragen ist, daß der Meßstrahl senkrecht auf die zu vermessende Fläche auftrifft, wird durch die Wirkung des Kragens stets eingehalten, so daß sich die Handhabung der Farbmeßvorrichtung erheblich verbessert und der Anwendungsbereich erweitert wird.

Nach einer anderen vorteilhaften Weiterbildung der Erfindung weist die Wandung der im wesentlichen kegelstumpfförmig ausgebildeten, kappenartigen Halterung eine geschlitzte Wandung auf. Beim Aufstecken der Kappe auf das Gehäuse des Meßteils werden einerseits die Schlitze zwischen den Wandungsteilen der Kappe leicht aufgeweitet, so daß eine kraft- und formschlüssige Verbindung zwischen kappenförmiger Halterung und Gehäuse des Meßteils erreicht wird.

Andererseits ist nur ein relativ geringer Kraftaufwand erforderlich, um die aufgesteckte Halterung erneut von dem Gehäuse zu trennen, wenn die Meßvorrichtung für ein anderes Meßobjekt vorbereitet werden soll.

Entsprechend einer zusätzlichen Weiterbildung der Erfindung weist der Kragen an seiner der zu vermessenden Probe zugewandten Seite ein durch relativ großflächige Materialausnehmungen erzeugtes Oberflächenprofil auf, welches durch sich radial erstreckende Stege sowie an der Innenkante und an der Kragenperipherie einen verdickten Rand gekennzeichnet ist.

Eine derartige Oberflächenprofilierung sichert in vorteilhafter Weise bei ausreichender Biegesteifigkeit stets ein Aufsetzen der Farbmeßvorrichtung auf der zu vermessenden Probenoberfläche, bei welchem sich die Längsachse der Halterung - als wesentliche Meßvoraussetzung - senkrecht zu der von dem Kragen aufgespannten Ebene erstreckt.

Um die mit einer Scheibenhalterung versehene Farbmeßvorrichtung auch in einer Umgebung mit extremer Luftfeuchtigkeit oder in einem Bereich mit relativ aggressiver Atmosphäre einsetzen zu können, ist an der Halterung für die Scheibe entsprechend einer zusätzlichen Weiterbildung der Erfindung eine schlauchförmige Hülle vorgesehen, welche an der Peripherie des an der Halterung vorhandenen Kragens befestigt ist. Dazu weist die Hülle an dieser Stelle einen kreisringförmigen Flansch mit einer innenseitig angeordneten Ausnehmung auf, in welche die Kragenperipherie eingreift. Die derart ausgebildete Hülle umschließt das Meßteils vollständig.

Die schlauchförmige Hülle ist entsprechend einer zusätzlichen Weiterbildung der Erfindung an ihrer der Halterung gegenüberliegenden Seite verschließbar ausgebildet. Gleichzeitig ist an dem Verschlußmechanismus ein Mittel zum vereinfachenden Handhaben der Farbmeßvorrichtung vorgesehen. Nach einer günstigen Weiterbildung der Erfindung ist dazu eine Seilschlaufe vorgesehen, mit welcher die Farbmeßvorrichtung während der Messung am Handgelenk der die Messung durchführenden Person gesichert werden oder nach Beendigung einer Messung sichtbar und stets zugänglich, beispielsweise durch Anhängen, aufbewahrt werden kann.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 die Längsschnittdarstellung einer bevorzugten Ausführungsform der Erfindung,
Figur 2 ein Meßobjekt mit aufgesetzter Meßvorrichtung in Längsschnittdarstellung,
Figur 3 die Schnittdarstellung einer kappenförmigen Scheibenhalterung der Farbmeßvorrichtung sowie
Figur 4 die in Figur 3 gezeigte Scheibenhalterung in Draufsicht.

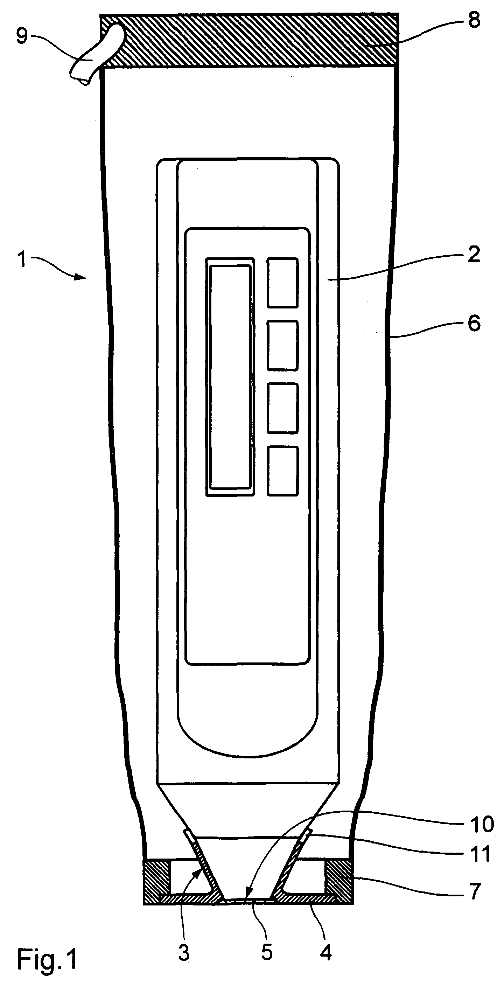

Die in Figur 1 dargestellte Farbmeßvorrichtung 1 weist einen Meßteil 2 in Form eines Schreibgeräts auf, welcher sich durch eine handliche Größe auszeichnet. An der Meßöffnung 10 des Meßteils 2 ist eine Halterung 3 für eine die Meßöffnung transparent verschließende Scheibe 5 vorgesehen. Die Halterung ist als kegelstumpfförmige, aufsteckbare Kappe ausgebildet, wobei die Scheibe 5 an der Kegelstumpfspitze eingesetzt ist.

An dem die transparente Scheibe 5 tragenden Ende der Kappe 3 ist ein kreisringförmiger, die Scheibe 5 umgreifender Kragen 4 derart vorgesehen, daß sich die durch den Kragen 4 aufgespannte Ebene im wesentlichen senkrecht zur Richtung des aus der Farbmeßvorrichtung 1 austretenden Meßstrahls der Lichtquelle und im wesentlichen parallel zur Scheibenebene erstreckt.

Gleichzeitig liegen die vom Meßteil 2 abgewandten Seiten des Kragens 4 bzw. der Scheibe 5 in der gleichen Ebene, welche eine sich quer zur Achse des Meßstrahl erstreckende Auflagefläche bilden, mit welcher die Farbmeßvorrichtung 1 auf die zu vermessende Oberfläche aufgesetzt wird.

Die an dem scheibenfreien Ende der kappenförmigen Halterung 3 vorgesehenen Schlitze 11 sichern eine erhöhte Flexibilität der Wandung der Halterung 3. Dadurch ist einerseits ein bequemes Aufstecken der Halterung 3 auf das konische Ende des Meßteils 2 möglich und andererseits ein kraft- und formschlüssigen Sitz der Scheibe 5 vor der Meßöffnung 10 erreichbar.

An der Peripherie des Kragens 4 ist eine schlauchförmige Hülle 6 mittels eines kreisringförmigen Flansches 7 befestigt. Die Hülle 6 schließt den Meßteil 2 vollständig ein und ist an ihrem freien Ende verschließbar ausgebildet. Der Verschluß 8 trägt eine als Seilschlaufe ausgestaltete Handschlaufe 9, mit welcher die Farbmessvorrichtung 1 während der Messung am Handgelenk der Bedienungsperson gesichert werden kann.

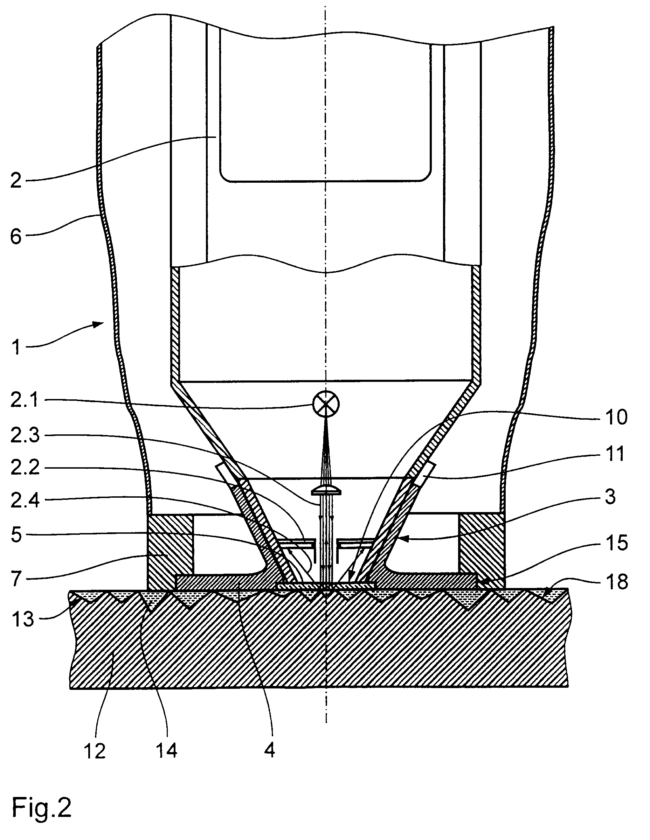

Figur 2 zeigt die auf einer zu vermessenden, anodisierten Oberfläche 13 einer Probe 12 aus Aluminium aufgesetzte Farbmeßvorrichtung 1. Die Rauhigkeit der Oberfläche 13 der Probe 12 ist durch die Krater 14 schematisiert dargestellt. Durch Auftragen eines Netzmittels 18 wird die Rauhigkeit optisch egalisiert und ein Eliminieren des durch die Rauhigkeit bedingten Strahlungsanteils in dem diffus von der Probe 12 reflektierten Licht durch eine Totalreflexion an der zu vermessenden Oberfläche erreicht.

Die Voraussetzung, daß sich die Achse des von der Lichtquelle 2.1 abgegebenen Meßstrahls 2.3 des Meßteils 2 der nach dem Remissionsprinzip arbeitende Farbmeßvorrichtung 1 senkrecht zu der zu vermessenden Oberfläche 13 der Probe 12 erstreckt, wird beim Aufsetzen der Farbmeßvorrichtung auf die Probe 12 durch die erfindungsgemäße Anordnung des Kragens 4 der Halterung 3 automatisch erfüllt. Die diffus von der zu vermessenden Probenoberfläche 13 reflektierte Strahlung 2.2 fällt auf einen Sensor 2.4.

Der kreisringförmige Flansch 7 weist innenseitig eine ringförmig ausgebildete Ausnehmung 15 auf, in welche der Kragen 4 der kappenartigen Halterung 3 eingepreßt ist. Dadurch ist eine im wesentlichen flüssigkeitsdichte Verpackung des Meßteils 2 in dem Hüllschlauch 6 gesichert.

Der Hüllschlauch besteht aus einer durchsichtigen Polyethylenfolie, so daß die Handhabung der Farbmeßvorrichtung 1 durch das Einhüllen des Meßteils 2 nicht beeinträchtigt wird.

Die die aus Glas bestehende Scheibe 5 tragende Halterung 3 ist aus einem Kunststoff gefertigt, wobei sich insbesondere der Kragen 4 - zwecks Einhalten der für das Remissionsprinzip erforderlichen Orthogonalitäts zwischen Meßstrahl und zu vermessender Oberfläche durch eine erhöhte Formstabilität auszeichnet.

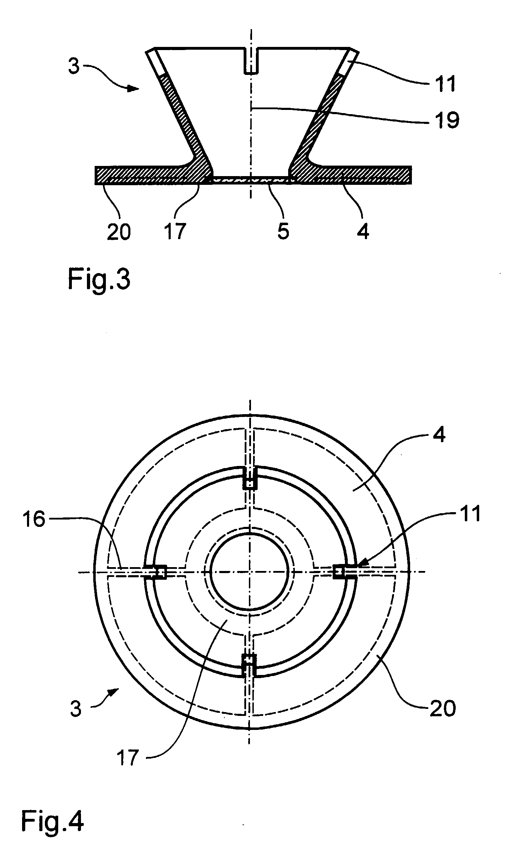

Die in den Figuren 3 und 4 im Schnitt bzw. in Draufsicht dargestellte Halterung 3 ist als kegelstumpfförmige Kappe ausgebildet, wobei an der Spitze des Kegelstumpfes eine Glasscheibe 5 eingesetzt ist. Ein die Scheibe 5 umgreifender Kragen 4 spannt eine Ebene auf, welche sich senkrecht zur Achse 19 des Kegelstumpfes erstreckt.

Die in der Wandung der kappenförmigen Halterung 3 angeordneten Schlitze 11 weisen eine Länge von 15% der keglestumpfartigen Kappe 3 auf. Die sich daraus ergebende Wandungsflexibilität sichert einerseits einen durch Kraft- und Formschluß bedingten festen Sitz und ermöglicht andererseits ein bequemes Abnehmen der Halterung 3 ohne besonderen Kraftaufwand.

Der Kragen 4 ist an seiner der Probenoberfläche 13 zugewandten Seite derart ausgespart, daß sich einerseits radial erstreckende Stege 16 und andererseits innen- sowie außenseitig jeweils ein verdickter Rand 17, 20 ergibt. Dadurch wird bei ausreichender Biegesteifigkeit stets ein Aufsetzen der Farbmeßvorrichtung auf der zu vermessenden Probenoberfläche gesichert, bei welchem sich die Längsachse 19 der Halterung 3 - als wesentliche Meßvoraussetzung - senkrecht zu der von dem Kragen 4 aufgespannten Ebene erstreckt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

## Patentansprüche

1. Farbmeßvorrichtung (1), vorzugsweise zur Messung der Intensität der Farbgebung bei anodisierten Aluminiumoberflächen, mit einem eine Lichtquelle (2.1) und einen in einem gemeinsamen, eine Meßöffnung (10) aufweisenden Gehäuse angeordneten, zum Empfang des von der zu vermessenden Oberfläche diffus reflektierten Lichtes (2.4) vorgesehenen Sensor (2.2) aufweisenden Meßteil (2), wobei vor der Meßöffnung (10) in dem Strahlengang zwischen der Lichtquelle (2.1) und der zu vermessenden Oberfläche (13) eine transparente Scheibe (5) angeordnet ist,
**dadurch gekennzeichnet,**
daß die transparente Scheibe (5) in einer getrennten, mit dem in Form eines Schreibgeräts ausgebildeten Meßteil (2) verbindbaren Halterung (3) vorgesehen ist, wobei die Halterung mit Scheibe (5) gegen das Eindringen von Flüssigkeit bei Eintauchen in dieselbe abgedichtet ist.

2. Farbmeßvorrichtung nach Anspruch 1, **dadurch gekkenzeichnet**, daß die Halterung als eine auf den die Meßöffnung (10) aufweisenden Bereich des Gehäuses des Meßteils (2) aufsteckbare Kappe (3) ausgebildet ist und die transparente Scheibe (5) den Kappenboden bildet.

3. Farbmeßvorrichtung nach Anspruch 2, **dadurch gekennzeichnet,** daß die Kappe (3) form- und/oder kraftschlüssig befestigbar ist.

4. Farbmeßvorrichtung nach einem der Ansprüche 2 und 3, **durch gekennzeichnet,** daß die Kappe (3) zur Erzeugung einer zwischen Kappe (3) und Gehäuse wirkenden Klemmkraft eine geschlitzte Wandung aufweist.

5. Farbmeßvorrichtung nach Anspruch 4, **durch gekennzeichnet,** daß die Schlitze (11) am scheibenfreien Ende der Kappe (3) beginnen und sich im wesentlichen in Richtung der Kappenachse erstrecken.

6. Farbmeßvorrichtung nach Anspruch 5, **durch gekennzeichnet,** daß die Schlitze (11) eine Länge von mindestens 15% der Länge der Kappe (3) aufweisen.

7. Farbmeßvorrichtung nach einem der vorhergehenden Ansprüche, **dadurch gekennzeichnet,** daß die Halterung (3) im wesentlichen kegelstumpfförmig ausgebildet ist, wobei die transparente Scheibe (5) das den geringeren Durchmesser aufweisende Ende des Kegelstumpfes verschließt.

8. Farbmeßvorrichtung nach Anspruch 7, **dadurch gekennzeichnet,** daß an dem die transparente Scheibe (5) tragenden Ende der Halterung (3) ein kreisringförmiger, die Scheibe (5) umgreifender Kragen (4) derart vorgesehen ist, daß sich die durch den Kragen (4) aufgespannte Ebene im wesentlichen senkrecht zur Richtung des aus der Vorrichtung austretenden Meßstrahls der Lichtquelle und im wesentlichen parallel zur Scheibenebene erstreckt.

9. Farbmeßvorrichtung nach Anspruch 8, **dadurch gekennzeichnet,** daß der Kragen (4) zur Bildung von Auflageflächen sich radial erstreckende Stege (16) sowie an der Innenkante und am peripheren Rand jeweils einen verdickten Rand (17, 20) aufweist.

10. Farbmeßvorrichtung nach Anspruch 9, **dadurch gekennzeichnet,** daß die der Probe zugewandten Seiten der Stege (16), der Ränder (15, 17) und der transparenten Scheibe (5) in derselben Ebene gelegen sind.

11. Farbmeßvorrichtung nach einem der Ansprüche 8 bis 10, **dadurch gekennzeichnet,** daß die Peripherie des Kragens (4) mit einer schlauchförmigen Hülle (6) verbunden ist, welche auch das Gehäuse des Meßteils (2) im wesentlichen vollständig umschließt.

12. Farbmeßvorrichtung nach Anspruch 11, **dadurch gekennzeichnet,** daß die Hülle (6) aus Polyethylen-Folie besteht.

13. Farbmeßvorrichtung nach einem der Ansprüche 11 oder 12, **dadurch gekennzeichnet**, daß die Hülle (6) an einem Ende einen kreisringförmigen Flansch (7) mit einer innenseitig angeordneten Ausnehmung (15) aufweist, in welche der äußere Rand (20) des Kragens (4) eingreift.

14. Farbmeßvorrichtung nach Anspruch 13, **dadurch gekennzeichnet,** daß der Kragen (4) in die Ausnehmung (15) eingepreßt ist.

15. Farbmeßvorrichtung nach einem der Ansprüche 11 bis 14, **dadurch gekennzeichnet,** daß das der Kappe (3) abgewandte Ende der schlauchförmigen Hülle (6) verschließbar ausgebildet ist.

16. Farbmeßvorrichtung nach einem der vorherigen Ansprüche, **dadurch gekennzeichnet,** daß die Halterung (3) einschließlich des Kragens (4) aus Kunststoff besteht.

17. Farbmeßvorrichtung nach einem der vorhergehenden Ansprüche, **dadurch gekennzeichnet,** daß als transparente Scheibe (5) eine Glasscheibe vorgesehen ist.

18. Farbmeßvorrichtung nach Anspruch 15, **dadurch gekennzeichnet,** daß zum Verschließen der Hülle (6) eine Verschlußklemme (8) vorgesehen ist.

19. Farbmeßvorrichtung nach Anspruch 18, **dadurch gekennzeichnet,** daß an der Verschlußklemme (8) eine Handschlaufe (9) vorgesehen ist.
